Europäisches Patentamt

European Patent Office

Office européen des brevets

(11) Numéro de publication: **0 494 572 A1**

## (12) DEMANDE DE BREVET EUROPEEN

(21) Numéro de dépôt: **91440106.2**

(22) Date de dépôt: **10.12.91**

(51) Int. Cl.5: **B23P 21/00**, B23K 37/04

(30) Priorité: **07.01.91 FR 9100176**

(43) Date de publication de la demande:
**15.07.92 Bulletin 92/29**

(84) Etats contractants désignés:
**AT BE CH DE DK ES GB GR IT LI NL SE**

(71) Demandeur: **FERCO INTERNATIONAL Usine de Ferrures de Bâtiment Société à responsabilité limitée 2, rue du Vieux-Moulin Reding**

F-57400 Sarrebourg(FR)

(72) Inventeur: **Kautt, Jean-Jacques 24, rue Pertois F-67000 Strasbourg(FR)**

(74) Mandataire: **Aubertin, François Cabinet Lepage & Aubertin Innovations et Prestations 4, rue de Haguenau F-67000 Strasbourg(FR)**

(54) **Dispositif pour l'assemblage des pièces intervenant sur une têtière correspondant à une crémone ou crémone-serrure pour ouvrant oscillo-battant.**

(57) Un dispositif pour l'assemblage des pièces intervenant sur une têtière (1) correspondant à une crémone ou crémone-serrure pour ouvrant oscillo-battant cette têtière (1) recevant, sur sa face arrière (2) destinée à venir en applique sur le chant avant dudit ouvrant, au moins un boîtier (3) susceptible d'accueillir un mécanisme de commande d'organes de verrouillage, tels que tringles de manoeuvre ou autres et, sur sa face avant (4), orientée en direction du cadre dormant, au moins un épaulement de sécurité (6) formé par une pièce en forme d'équerre susceptible de coopérer avec une gâche ou analogue en vue de prévenir l'ouvrant d'un mouvement ascendant lorsqu'il est en position battante, ce dispositif d'assemblage comportant des moyens d'assemblage automatiques par soudure du ou des boîtiers (3) et de l'épaulement de sécurité (6) sur ladite têtière (1), ces moyens d'assemblage automatiques consistant en des postes d'assemblage par soudure (20, 21) implantés de manière fixe le long d'un transporteur (19) avançant pas à pas, ainsi qu'en des moyens de positionnement (32, 33) des têtières (1) par rapport à chacun des postes d'assemblage par soudure (20, 21).

FIG. 4

L'invention concerne un dispositif pour l'assemblage des pièces intervenant sur une têtière correspondant à une crémone ou crémone-serrure pour ouvrant oscillo-battant, dispositif selon le préambule de la revendication 1.

La présente invention concerne les fabricants de machines automatiques destinées, plus particulièrement, à l'assemblage des pièces constitutives de ferrures de verrouillage.

En fait, le problème auquel s'attache la présente invention consiste en ce que sur des têtières, notamment de crémones ou crémones-serrures pour ouvrants oscillo-battants, il y a lieu de rapporter, plus particulièrement, par soudure, d'une part, au moins un boîtier destiné à accueillir, ultérieurement, un mécanisme de commande au travers duquel il doit être possible d'actionner un organe de verrouillage tel qu'une tringle de manoeuvre ou autre et, d'autre part, au moins un épaulement de sécurité, celui-ci étant fixé sur la face externe de la têtière, en vue de coopérer avec une gâche ou équivalent disposée sur le cadre dormant et prévenir, ainsi, tout mouvement ascendant que l'on tenterait de conférer à l'ouvrant, lorsque celui-ci est en position battante.

En fait, l'assemblage des pièces suscitées sur une telle têtière de crémone ou crémone-serrure était réalisé, jusqu'à présent, par des moyens que l'on pourrait qualifier de manuels en ce sens que cela nécessitait une intervention importante de la part d'opérateurs qualifiés.

Il convient, en effet, de prendre en considération le fait que lesdites têtières peuvent emprunter des dimensions diverses ce qui vient à poser le problème du repérage de la position de ces pièces que constituent le ou les boîtiers et l'épaulement de sécurité sur ces têtières.

En fait, on connaît déjà, notamment par le document FR-A-2.589.933, une installation d'assemblage de différentes pièces d'un élément de ferrure tel qu'une crémone-serrure de fenêtre, porte ou analogue, installation qui permet, en fait, d'intervenir sur des ferrures de différentes dimensions.

Aussi et en vue de satisfaire aux conditions précitées, cette installation connue comporte un transporteur avançant pas à pas et sur lequel vient à être disposé, par intermittence régulière, le premier élément destiné à constituer ladite ferrure et, il s'agit, fréquemment, de la têtière. De plus, cette installation comprend, pour chaque pièce à assembler, au moins un poste d'assemblage disposé selon un plan de référence donné de l'élément de ferrure.

Plus particulièrement, en vue de satisfaire à la condition d'assemblage de ferrures de différentes dimensions, cette installation comporte, également, en combinaison avec des moyens d'avancement suivant l'axe longitudinal du transporteur des moyens de déplacement latéral susceptibles de conférer à l'élément de ferrure, sur lesquels sont montées les différentes pièces, un parcours bidirectionnel, cet élément de ferrure étant, ainsi, apte à coopérer avec des repères de positionnement distincts selon les postes d'assemblage.

En fait et au travers de cette installation, il suffit, de manière à l'adapter à des ferrures de tailles différentes, de modifier au niveau des postes d'assemblage concernés, les repères de positionnement, notamment, lorsque ceux-ci sont fonction, précisément, de cette taille de ladite ferrure.

Tel que déjà exposé ci-dessus, dans le cas (de cette installation, les différents postes d'assemblage sont disposés en fonction d'un plan de référence. Il s'agit, dans ce cas, du plan médian du boîtier destiné à accueillir le mécanisme de commande central de la crémone ou crémone-serrure et qui est apposé sur la face dorsale de la têtière, formant l'élément principal de la ferrure et, de ce fait, recevant l'ensemble des autres pièces, au travers de l'installation d'assemblage.

Cependant, ce plan repère ne peut être choisi qu'en cas où la têtière est, effectivement, pré-équipée du boîtier. En effet, ce n'est qu'au travers de la présence dudit boîtier que l'installation saura positionner la têtière par rapport à ce plan repère.

En conséquence, en aucun cas, cette installation ne peut intervenir sur des têtières non équipées d'un tel boîtier.

Par ailleurs, il convient d'observer qu'en cas d'assemblage par simple emboîtement ou, même, par rivetage, il est particulièrement aisé de positionner les différentes pièces entre elles, notamment, en raison de la configuration de ces pièces autorisant cet emboîtement ou encore grâce à la présence d'un téton ou analogue autorisant le rivetage.

Or, ceci n'est nullement le cas lors d'une fixation par soudure. En effet, dans ces conditions, les pièces à souder sont généralement dépourvues d'organes autorisant leur positionnement respectif avant même d'assurer l'assemblage. Ceci est notamment vrai lors du montage d'un boîtier ou d'un épaulement de sécurité sur une têtière.

En fait, la soudure impose l'association et le maintien des pièces à souder au-dessous du poste de soudure. Chacune de ces pièces doit, par ailleurs, être maintenue séparément au travers d'organes permettant de garantir, finalement, leur positionnement respectif au moment de la soudure.

En définitive, cette condition est à considérer comme d'autant plus complexe et difficile à résoudre lorsque l'on sait que le montage par soudure doit s'effectuer avec une très grande précision, ceci quelle que soit la longueur de la ferrure considérée.

La présente invention se propose, précisément, d'apporter une solution à l'ensemble des problèmes précités. L'invention, telle qu'elle est caractérisée dans les revendications, résout le problème et consiste en un dispositif pour l'assemblage des pièces intervenant sur une têtière correspondant à une crémone ou crémone-serrure pour ouvrant oscillo-battant, ladite têtière recevant, sur sa face arrière, destinée à venir en applique sur le chant avant dudit ouvrant, au moins un boîtier susceptible d'accueillir un mécanisme de commande d'organe de verrouillage, tels que tringles de manoeuvre ou autres et, sur sa face avant orientée en direction du cadre dormant, au moins un épaulement de sécurité, formé par une pièce en forme d'équerre susceptible de coopérer avec une gâche ou analogue en vue de prévenir l'ouvrant d'un mouvement ascendant lorsqu'il est en position battante, ce dispositif comportant des moyens d'assemblage automatiques par soudure du ou des boîtiers et de l'épaulement de sécurité sur la têtière d'une crémone ou crémone-serrure, ces moyens d'assemblage automatiques présentant, en combinaison :

- des moyens d'alimentation en têtière ;
- des moyens de manipulation pour disposer, une après l'autre et transversalement, lesdites têtières sur un transporteur avançant pas à pas ;
- des moyens de positionnement des têtières par rapport à un poste d'assemblage par soudure d'un boîtier et, ce, au travers d'un plan repère se situant à proximité du plan médian de la position du boîtier sur ladite têtière ;
- des moyens de positionnement desdites têtières par rapport à un poste d'assemblage par soudure d'un épaulement de sécurité, selon un second plan repère présent sur lesdites têtières à proximité de la position, sur cette dernière, dudit épaulement de sécurité ;
- lesdits postes d'assemblage par soudure du ou des boîtiers et de l'épaulement de sécurité étant disposés de manière fixe par rapport au transporteur et intégrant des moyens d'alimentation, en boîtier ou en épaulement de sécurité des moyens de contrôle de présence de ces derniers et des moyens de positionnement et de maintien, avant soudure de ces boîtiers ou de ces épaulements de sécurité.

Selon une autre caractéristique de l'invention, les moyens d'alimentation, les moyens de contrôle de présence de pièces et les moyens de positionnement et de maintien, avant soudure, des boîtiers ou des épaulements de sécurité, au niveau d'un poste d'assemblage par soudure, sont disposés au-dessous du transporteur, une telle disposition venant à réduire, considérablement, l'encombrement général du dispositif d'assemblage.

Les avantages découlant de cette invention consistent, essentiellement, en ce qu'il est possible de disposer, à présent, d'un outil susceptible d'assurer un assemblage automatique par soudure des pièces intervenant sur une têtière quelle que soit la longueur de cette dernière et, ceci, avec une précision parfaite.

L'invention est exposée, ci-après, plus en détail à l'aide de dessins représentant seulement un mode d'exécution.

- la figure 1 représente une vue schématisée et en élévation d'une têtière pour crémone ou crémone-serrure comportant, au niveau de sa face arrière au moins un boîtier et, au niveau de sa face avant, un épaulement de sécurité ;
- la figure 2 représente une vue de droite de la figure 1 ;
- la figure 3 représente une vue de gauche de la figure 1 ;
- la figure 4 est une représentation schématisée et en plan du dispositif d'assemblage des pièces intervenant sur une têtière pour crémones ou crémones-serrures, dispositif conforme à l'invention.

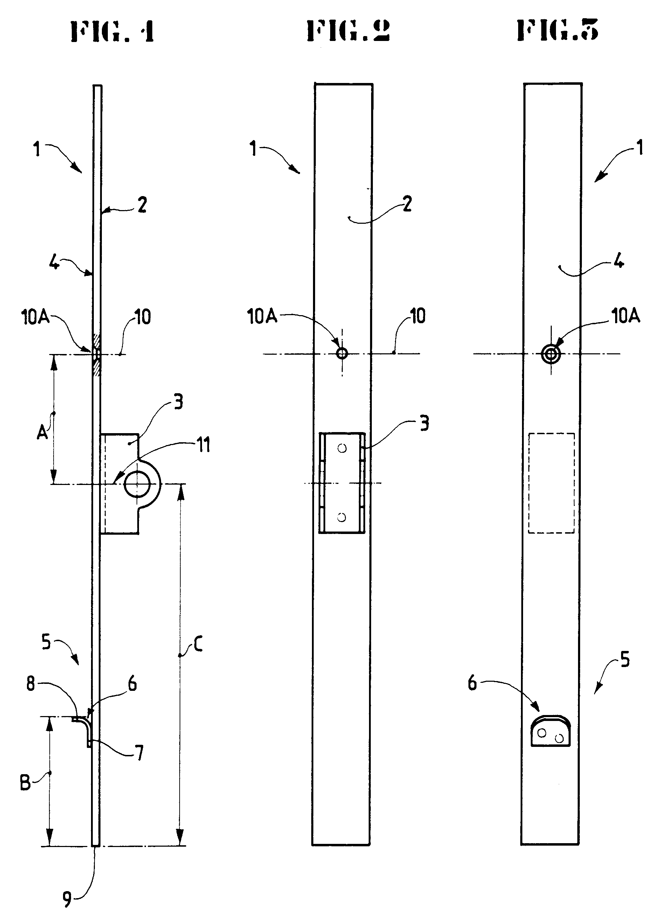

La présente invention est relative à l'assemblage d'une têtière 1, telle que représentée dans les figures 1 à 3 et correspondant, plus particulièrement, à une crémone ou crémone-serrure pour ouvrants oscillo-battants de portes, fenêtres ou analogues.

En fait, une telle têtière 1, qui se présente sous forme d'un plat métallique longiligne, comporte, au niveau de sa face arrière 2 destinée à venir en applique sur le chant avant dudit ouvrant oscillo-battant, au moins un boîtier 3 dans le ou lesquels viendront à être disposés les mécanismes de commande, soit de tringles de manoeuvre, soit de tout autre organe de verrouillage, tel que panneton ou analogue.

En fait, dans le cadre des dessins, il a été représenté une têtière 1 ne comportant qu'un seul boîtier 3 destiné, plus particulièrement, à contenir le mécanisme de commande central de la crémone ou crémone-serrure. Toutefois, il convient de comprendre que la méthode et les moyens qui seront exposés ci-dessous pour assurer l'assemblage de ce boîtier central 3 sur la têtière 1 peuvent être appliqués d'une manière sensiblement identique pour d'autres boîtiers qui seraient, éventuellement, répartis sur toute la hauteur de ladite têtière 1.

Celle-ci est munie, en outre, sur sa face avant 4 et dans sa partie inférieure 5, d'un épaulement de sécurité 6 sous forme d'une pièce, approximativement, en équerre et comprenant, de ce fait, une aile 7 venant en applique sur ladite face avant 4 de la têtière 1 et une aile 8, sensiblement perpendiculaire à cette dernière. A noter, à ce propos, que ladite aile 8 de l'épaulement de sécurité 6 est de forme légèrement convexe.

En fait, il convient de préciser qu'un tel épaulement de sécurité 6 a pour fonction, notamment, au travers de son aile perpendiculaire 8 de coopérer avec une gâche (non représentée) disposée sur le cadre dormant de la porte, fenêtre ou analogue, en vue de prévenir l'ouvrant d'un éventuel mouvement ascendant qu'il serait possible de lui conférer lorsqu'il est, plus particulièrement, dans une position battante.

Plus précisément, lors d'une ouverture en abattant, l'ouvrant vient à pivoter autour d'un axe horizontal, matérialisé, sensiblement, par sa traverse inférieure. Cette rotation de l'ouvrant s'accompagne d'un déplacement de l'aile perpendiculaire 8, correspondant à l'épaulement de sécurité 6, dans sa gâche située au niveau du cadre dormant. Ceci explique, d'ailleurs, la forme curviligne de cette aile perpendiculaire 8. Toutefois, dans une telle position de l'ouvrant, cet épaulement de sécurité 6 est maintenu dans cette gâche du cadre dormant de sorte que l'ouvrant, qui est alors dégagé, dans sa partie supérieure, par rapport à ce dormant, ne puisse s'échapper de ses moyens d'articulation inférieurs suite à une poussée qui lui serait appliquée de manière inopinée.

En fait, qu'il s'agisse du boîtier 3 ou de l'épaulement de sécurité 6, ceux-ci sont rapportés sur la têtière 1 par soudure. Cependant, lors de cette soudure, il convient, bien évidemment, de positionner parfaitement le ou les boîtiers ainsi que cet épaulement de sécurité sur ladite têtière 1.

Plus précisément, ce positionnement est déterminé d'une manière générale, à partir du champ inférieur 9 de la têtière 1. Ainsi, s'il est exact que la côte B à laquelle se situe l'épaulement de sécurité 6 par rapport à ce champ inférieur 9 de la têtière 1 est invariable, il n'en est pas de même en ce qui concerne la côte C à laquelle se situe un boîtier 3 par rapport à ce chant inférieur 9. En effet, cette côte C est fonction, d'une part, du boîtier considéré et, d'autre part, de la taille de la têtière 1. Bien entendu, cette côte C est connue en théorie, toutefois elle est inexploitable en fabrication. En effet, il est très souvent difficile, voire impossible d'obtenir une précision suffisante lors du report de cette côte C, de module généralement important, sur une têtière de grande souplesse et se maintenant rarement, de manière strictement rectiligne, même disposée sur une surface plane.

Le seul moment où cette têtière 1 est maintenue de manière strictement plane est lors de sa conception par découpage et emboutissage d'un feuillard.

Aussi, il est préconisé, selon la présente invention, de créer, lors de cette conception de la têtière 1, un plan repère 10 qui se situe à une distance réduite de la position médiane 11 d'un boîtier 3 (quelconque) destiné à être apposé sur la têtière 1. Un tel plan repère 10 est, ainsi, facilement exploitable et permet d'aboutir à la précision désirée lors de l'assemblage par soudure. De plus, la côte A qui correspond à la distance séparant le plan repère 10 de ladite position médiane 11 du boîtier 3 est, préférentiellement, une constante pour chaque type de têtière et pour un boîtier donné.

Avantageusement, un tel plan repère 10 peut être constitué par un orifice 10A pratiqué dans la têtière 1 au moment de son emboutissage et découpage, cet orifice 10A trouvant, ultérieurement, son utilité, à savoir la fixation de ladite têtière sur le chant avant d'un ouvrant d'une porte, fenêtre ou analogue.

C'est précisément au travers de ce ou ces plans repères 10, créés à proximité du ou des boîtiers 3, ainsi que du plan repère constitué par le chant inférieur 9 de la têtière 1, que le dispositif d'assemblage, dont la description sera faite ci-dessous, permet d'obtenir un montage avec une grande précision de ce ou ces boîtiers 3, ainsi que de l'épaulement de sécurité 6 sur une telle têtière 1 pour crémones ou crémones-serrures pour ouvrants oscillo-battants.

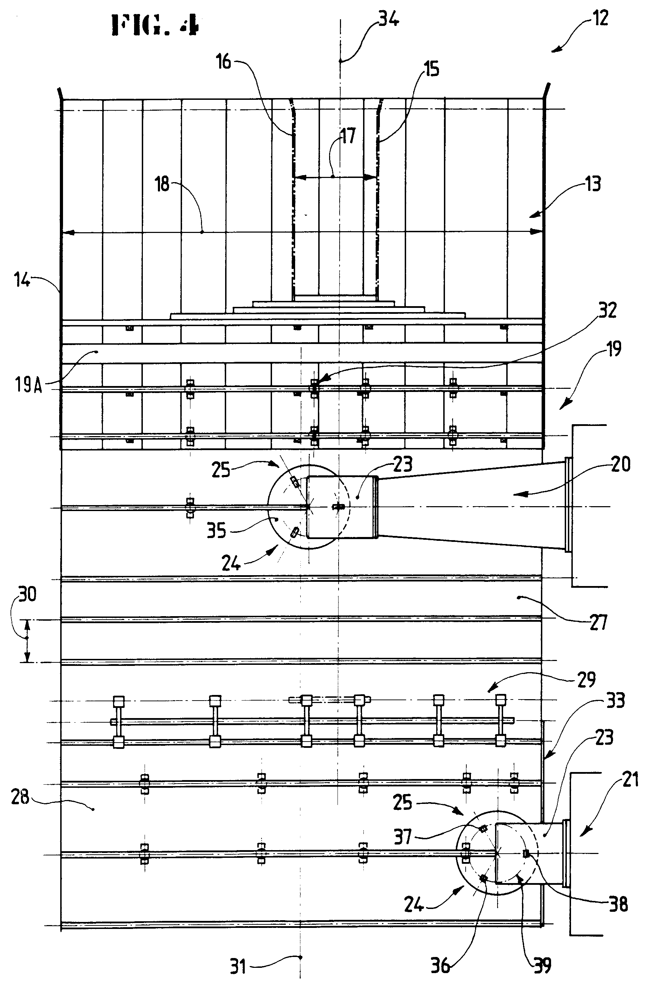

Tel que ceci apparaît dans la figure 4, ce dispositif d'assemblage 12 comporte des moyens d'alimentation 13 en têtière 1 constitués, par exemple, par une rampe d'alimentation 14 sur laquelle sont disposées lesdites têtières, à plat et dans un même sens, c'est-à-dire que, soit leur face arrière 2, soit leur face avant 4, est systématiquement orientée vers le haut. Ces têtières 1 sont ainsi, juxtaposées, sur ladite rampe d'alimentation 14 et sont positionnées sur cette dernière au travers de rails de guidage 15, 16 respectant entre eux, un écart 17 correspondant à la longueur du type de têtières en cours de montage.

A noter, à ce propos, qu'étant donné que le dispositif d'assemblage, conforme à la présente invention, est utilisable pour tout type de têtière 1, la rampe d'alimentation 14 comporte, préférentiellement, une largeur totale 18 au moins égale à la longueur la plus importante que peut adopter une têtière 1. C'est précisément, pour illustrer ceci que, sur la rampe d'alimentation 14 représentée dans la figure 4, il a été disposé des têtières 1 de différentes longueurs. La position des rails de guidage 15, 16, doit, cependant, être adaptée à chacune des séries de têtières traitées.

Ce dispositif d'assemblage 12 est muni, en outre, de moyens 19A tels qu'un manipulateur destiné à prélever les têtières 1 une à une depuis la rampe d'alimentation 14 en vue de les disposer, successivement, dans des taquets et transversalement sur un transporteur 19 soumis à un mouvement d'avance pas à pas.

En fait, le transporteur 19 est équipé d'au moins deux postes d'assemblage par soudure 20, 21 dont l'un servira au montage d'un boîtier 3 sur les têtières 1, tandis que le second poste d'assemblage 21 viendra à assurer la soudure de l'épaulement de sécurité 6.

Selon une caractéristique de la présente invention, ces postes d'assemblage 20, 21, sont fixes sur le transporteur 19. De plus, ils regroupent, tant des moyens de soudure 23 que des moyens d'alimentation 24 et des moyens 25 de contrôle de présence d'un boîtier 3 ou d'un épaulement de sécurité 6.

Ces postes d'assemblage 20, 21 sont munis, également, de moyens de maintien et de positionnement d'un boîtier 3 ou d'un épaulement de sécurité 6 par rapport à une têtière 1 préalablement à la soudure.

En fait, le regroupement de ces différents moyens 23, 24, 25 au niveau des postes d'assemblage 20, 21, est lié au fait que ces derniers et, plus particulièrement, les moyens de soudure 23 doivent emprunter une position définitive sur le transporteur 19, ceci en vue de garantir les précisions recherchées.

Toutefois, ces moyens 23, 24, 25, confèrent à ces postes d'assemblage 20, 21, un encombrement et un poids relativement important. Aussi, il est préconisé, selon l'invention, de disposer les moyens d'alimentation 24 en boîtiers 3 ou en épaulements de sécurité 6, ainsi que les moyens 25 de contrôle de présence de l'une ou l'autre de ces pièces et les moyens de maintien et de positionnement desdites pièces avant soudure, sous le transporteur 19. Une telle disposition évite l'aménagement de portiques aux dimensions conséquentes au-dessus du transporteur 19 et, par là même, conduit à un coût de revient amoindri du dispositif d'assemblage, conforme à l'invention. Cependant et au vu de ce qui précède, il est impératif que lesdites têtières 1 se présentent sur le transporteur 19, leur face arrière 2 orientée vers le bas, à leur arrivée au poste d'assemblage par soudure 20 d'un boîtier 3. Tandis qu'à leur approche du poste d'assemblage par soudure 21 de l'épaulement de sécurité 6, ces têtières 1 doivent se présenter de telle sorte que leur face avant 4 soit, cette fois-ci, orientée en direction du bas.

Ainsi, selon le premier poste d'assemblage par soudure 20, 21, rencontré, le manipulateur 19A, disposé entre le transporteur 19 et la rampe d'alimentation 14, aura pour fonction de prélever les têtières 1 au niveau de cette dernière, puis de les disposer dans le sens convenable dans les taquets prévus sur ledit transporteur 19.

Par ailleurs, ce dernier peut se composer de deux convoyeurs 27, 28 situés dans le prolongement l'un de l'autre, l'un de ces convoyeurs 27 regroupant le ou les postes d'assemblage par soudure 20 d'un boîtier 3, tandis que l'autre convoyeur 28 étant muni du poste d'assemblage par soudure 21 de l'épaulement de sécurité 6. Entre ces convoyeurs 27, 28 sont, alors, insérés des moyens de retournement 29 des têtières 1.

Cependant et selon un autre mode de réalisation, de tels moyens de retournement 29 peuvent être disposés sur un transporteur formé à partir d'un seul convoyeur et, ce, entre un poste d'assemblage par soudure 20 de boîtier 3 et un poste d'assemblage par soudure 21 d'épaulement de sécurité 6 venant à se succéder l'un par rapport à l'autre. Plus précisément, de tels moyens de retournement 29 viennent, ainsi, à prélever une têtière de ses taquets lors d'un arrêt dudit transporteur 19, puis à redéposer cette têtière dans les mêmes taquets qu'elle occupait précédemment mais dans une position retournée à 180 degrés et, ce, après la progression d'un pas 30 dudit transporteur 19.

Tel que déjà précisé plus haut, il existe un plan repère 9, 10 distinct selon que l'on désire positionner, respectivement, un épaulement de sécurité 6 ou un boîtier 3 sur une têtière 1. Aussi, à chacun des postes d'assemblage par soudure 20, 21, sont associés des moyens 32, 33, en vue de positionner parfaitement, les têtières 1 par rapport à ces plans repères 9, 10.

En fait, l'emplacement des postes d'assemblage 20, 21 sur le transporteur 19 est déterminé en fonction d'un plan de référence 34 qui peut être soit le plan médian longitudinal 31 du transporteur 19 ou encore le plan médian du boîtier central 3 venant à équiper une têtière 1. A noter, à ce propos, qu'un tel plan de référence 34, correspondant au plan médian du boîtier central 3 d'une têtière 1, est facilement déterminable au travers du plan repère 10 que constitue l'orifice 10A et la côte A constante.

Ainsi, ces postes d'assemblage 20, 21 sont disposés sur le transporteur 19 en concordance avec des têtières comportant les plans repères 10, 9 de boîtiers 3 ou d'épaulements de sécurité 6 les plus éloignés de ce plan de référence 34.

Si l'on prend à titre d'exemple, le poste d'assemblage par soudure 21 de l'épaulement de sécurité 6, celui-ci sera placé sur le transporteur 19 de manière à concorder avec la têtière comportant la plus grande longueur puisque présentant le plan repère 9 le plus éloigné du plan de référence 34. Ce raisonnement tient pour tous les autres boîtiers dont peut être équipée une têtière 1.

De plus, le dispositif d'assemblage 12 est équipé, au moins entre deux postes d'assemblage 20, 21 successifs ou au niveau de chacun de ces derniers de moyens de déplacement latéral des têtières 1 sur le transporteur 19.

En fait, de tels moyens de déplacement latéral, qui peuvent être de forme quelconque et de ce fait n'ont pas été représentés sur les dessins, ont pour but de faire coopérer les têtières 1 avec les moyens de positionnement 32, 33 correspondant à chacun des postes d'assemblage 20, 21.

Ces moyens de positionnement 32, 33 peuvent être constitués, selon le cas, par un taquet, aménagé au niveau du transporteur 19 et équipé d'un poisson conique venant s'insérer dans l'orifice 10A constituant le plan repère 10 correspondant à un boîtier 3, ou encore par une rampe de guidage contre laquelle vient buter le chant inférieur 9 desdites têtières 1. A noter, à ce propos, que le dispositif d'assemblage 12 peut être équipé d'un ou plusieurs postes de contrôle susceptibles de vérifier qu'une têtière 1 est parfaitement positionnée par rapport aux postes d'assemblage 20, 21. A titre d'exemple, des moyens de contrôle, identifiant la position du plan repère 10 par rapport aux moyens de positionnement 32, peuvent être constitués par des capteurs optiques ou palpeurs. Par ailleurs, les moyens de contrôle peuvent encore se présenter sous forme d'un dispositif susceptible de repousser ou, précisément, de maintenir les têtières 1 au niveau de leur chant inférieur 9 contre les moyens de positionnement 33 formés par une rampe de guidage.

Les postes d'assemblage 20, 21 comportent, par ailleurs, un plateau tournant 35 disposé, précisément, sous le transporteur 19 et comportant au moins trois emplacements 36, 37, 38 distincts répartis sur un cercle 39 et destinés à accueillir, soit des boîtiers 3, soit des épaulements de sécurité 6.

Ce plateau 35 est muni, au niveau de ces différents emplacements 36, 37, 38, desdits moyens de positionnement et de maintien, qui peuvent être constitués par des moyens de préhension quelconques et qui vont assurer la prise en charge, soit d'un boîtier 3, soit d'un épaulement de sécurité 6, en vue de l'amener au droit des moyens de soudure 23 et de garantir son parfait positionnement avant soudure sur la têtière 1 se présentant, à cet instant là, à hauteur du poste d'assemblage 20, 21.

En fait, à chaque séquence de rotation du plateau tournant 35, à quoi correspond l'avance d'un pas 30 du transporteur 19, un emplacement 36 vient se présenter au droit des moyens d'alimentation 24 et au travers desquels il reçoit un boîtier 3 ou un épaulement de sécurité 6. Tandis qu'un second emplacement 37 se présente à hauteur de moyens de contrôle 25 vérifiant la présence ou l'absence d'un boîtier 3 ou d'un épaulement de sécurité 6. Finalement, un autre emplacement 38 arrive à hauteur des moyens de soudure 23.

Plus précisément, pendant la séquence d'arrêt de fonctionnement du transporteur 19 et de ce plateau tournant 35, le boîtier 3 ou l'épaulement de sécurité 6 se situant à cet emplacement 38 vient à être parfaitement positionné sur la têtière 1. Puis interviennent les moyens de soudure 23 constitués, substantiellement, par deux électrodes disposées, respectivement, de part et d'autre du transporteur 19 en vue de souder ce boîtier 3 ou cet épaulement de sécurité 6 sur ladite têtière 1.

Bien entendu, entre chacun des postes d'assemblage 20, 21 peuvent, encore, être implantés des moyens de contrôle de présence ainsi que du positionnement du ou des pièces qui ont été soudées, préalablement sur la têtière 1.

Finalement, on comprend, au vu de la description qui précède, que le dispositif d'assemblage, conforme à l'invention permet, au travers de plans repères spécifiques, de satisfaire aux conditions de précision requises pour la soudure de pièces, telles que boîtiers ou épaulement de sécurité sur une têtière de crémone ou crémone-serrure pour ouvrant oscillo-battant. Cette invention a, donc, su répondre de manière efficace au problème rencontré jusqu'à présent dans ce domaine particulier.

**Revendications**

1. Dispositif pour l'assemblage des pièces intervenant sur une têtière (1) correspondant à une crémone ou crémone-serrure pour ouvrant oscillo-battant, ladite têtière (1) recevant, sur sa face arrière (2) destinée à venir en applique sur le chant avant dudit ouvrant, au moins un boîtier (3) susceptible d'accueillir un mécanisme de commande d'organes de verrouillage, tels que tringles de manoeuvre ou autres, et, sur sa face avant (4) orientée en direction du cadre dormant, au moins un épaulement de sécurité (6), formé par une pièce en forme d'équerre susceptible de coopérer avec une gâche ou analogue en vue de prévenir l'ouvrant d'un mouvement ascendant lorsqu'il est en position battante, dispositif caractérisé par le fait qu'il comporte des moyens d'assemblage automatiques par soudure du ou des boîtiers (3) et de l'épaulement de sécurité (6) sur la têtière (1) d'une crémone ou crémone-serrure, ces moyens d'assemblage automatiques comportant, en combinaison :
   - des moyens d'alimentation (13) en têtière (1) ;
   - des moyens de manipulation (19A) pour disposer l'une après l'autre et transversalement, lesdites têtières (1) sur un transporteur (19) avançant pas à pas ;
   - des moyens de positionnement (32) des têtières (1) par rapport à un poste d'assemblage par soudure (20) d'un boîtier (3) et, ce, au travers d'un plan repère (10) se situant à proximité du plan médian (11) de la position dudit boîtier (3) sur ladite têtière (1) ;

- des moyens de positionnement (33) desdites têtières (1) par rapport à un poste d'assemblage par soudure (21) d'un épaulement de sécurité (6) selon un plan repère (9) présent sur lesdites têtières (1) à proximité de la position, sur cette dernière, dudit épaulement de sécurité (6) ;

- lesdits postes d'assemblage par soudure (20, 21), respectivement, du ou des boîtiers (3) et de l'épaulement de sécurité (6), étant disposés de manière fixe par rapport au transporteur (19) et intégrant des moyens d'alimentation (24) en boîtiers (3) ou en épaulement de sécurité (6), des moyens de contrôle (25) de présence de ces derniers et des moyens de positionnement et de maintien, avant soudure, de ces boîtiers (3) ou de ces épaulements de sécurité (6).

2. Dispositif d'assemblage selon la revendication 1, caractérisé par le fait que les moyens d'alimentation (24), les moyens de contrôle de présence de pièces (25) et les moyens de positionnement et de maintien, avant soudure, des boîtiers (3) ou des épaulements de sécurité (6), au niveau d'un poste d'assemblage par soudure (20, 21), sont disposés au-dessous du transporteur (19).

3. Dispositif d'assemblage selon la revendication 1, caractérisé par le fait que les moyens d'alimentation (13) en têtière (1) sont constitués par une rampe d'alimentation (14) sur laquelle sont disposées lesdites têtières (1), à plat et dans un même sens de sorte que, soit leur face arrière (2), soit leur face avant (4), soit systématiquement orientée vers le haut, ces têtières (1) étant positionnées sur cette rampe d'alimentation (14) au travers de rails de guidage (15, 16) respectant, entre eux, un écart (17) correspondant à la longueur desdites têtières (1), cette rampe d'alimentation (14) comportant une largeur totale (18) au moins égale à la longueur la plus importante que peut adopter une têtière (1).

4. Dispositif d'assemblage selon la revendication 1, caractérisé par le fait que le plan repère (10), par rapport auquel les moyens de positionnement (32) viennent à assurer le positionnement d'une têtière (1) par rapport à un poste d'assemblage par soudure (20) d'un boîtier (3), est constitué par un orifice (10A) aménagé à une côte A constante du plan médian (11) de la position dudit boîtier (3) sur ladite têtière (1).

5. Dispositif d'assemblage selon les revendications 1 et 4, caractérisé par le fait que les moyens de positionnement (32) sont constitués par un poinçon aménagé au niveau de taquets prévus sur le transporteur (19) avançant pas à pas, un tel poinçon venant à s'insérer dans l'orifice (10A) constituant un plan repère (10) pour positionner la têtière (1) par rapport à un poste d'assemblage par soudure (20) d'un boîtier (3).

6. Dispositif d'assemblage selon la revendication 1, caractérisé par le fait que le plan repère (9), par rapport auquel les moyens de positionnement (33) viennent à positionner les têtières (1) sur le transporteur (19) au niveau du poste d'assemblage par soudure (21) de l'épaulement de sécurité (6), est constitué par le chant inférieur, se situant à proximité de la position dudit épaulement de sécurité (6), desdites têtières (1).

7. Dispositif d'assemblage selon les revendications 1 et 6, caractérisé par le fait que les moyens de positionnement (33) sont constitués par une rampe de guidage aménagée sur le transporteur (19) et contre laquelle vient buter le chant inférieur (9) des têtières (1) à hauteur du poste d'assemblage par soudure (21) de l'épaulement de sécurité (6).

8. Dispositif d'assemblage selon les revendications 1 et 2, caractérisé par le fait que les postes d'assemblage par soudure (20, 21) comportent un plateau tournant (35) présentant au moins trois emplacements (36, 37, 38) distincts répartis sur un cercle (39) et destiné à accueillir, soit des boîtiers (3), soit des épaulements de sécurité (6), au niveau de chacun de ces emplacements (36, 37, 38) étant aménagés lesdits moyens de positionnement et de maintien, avant soudure, d'un boîtier (3) ou d'un épaulement de sécurité (6).

9. Dispositif d'assemblage selon la revendication 8, caractérisé par le fait qu'à chaque séquence de rotation du plateau tournant (35) correspond l'avance d'un pas (30) du transporteur (19), de sorte que :

- un emplacement (36) vient à se présenter au droit des moyens d'alimentation (24) au travers desquels il reçoit un boîtier (3) ou un épaulement de sécurité (6) ;

- un second emplacement (37) se présente à hauteur de moyens de contrôle (25)

vérifiant la présence ou l'absence d'un boîtier (3) ou d'un épaulement de sécurité (6) ;
- et un autre emplacement (38) arrive sous les moyens de soudure (23).

10. Dispositif d'assemblage selon la revendication 1, caractérisé par le fait qu'entre un poste d'assemblage par soudure d'un boîtier (3) et un poste d'assemblage par soudure d'un épaulement de sécurité (6) sont implantés, sur le transporteur (19), des moyens de retournement (29) des têtières (1).

11. Dispositif d'assemblage selon la revendication 1, caractérisé par le fait qu'entre deux postes d'assemblage par soudure successifs sont implantés des moyens de déplacement latéral des têtières (1) de manière à faire coopérer les plans repères (10, 9) de ces dernières avec les moyens de positionnement (32, 33) correspondant à chacun desdits postes d'assemblage (20, 21).

12. Dispositif d'assemblage selon la revendication 1, caractérisé par le fait qu'il comporte un ou plusieurs postes de contrôle disposés avant chaque poste d'assemblage par soudure (20, 21) en vue de contrôler le positionnement des têtières (1) par rapport aux moyens de positionnement (32, 33).

# FIG. 1    FIG.2    FIG.3

# FIG. 4

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | FR-A-2 589 933 (FERCO)<br><br>* page 4, line 10 - line 26 *<br>* page 4, line 34 - page 5, line 2 *<br>* page 6, line 24 - line 29 *<br>--- | 1,4,6,7,<br>11 | B23P21/00<br>B23K37/04 |
| A | EP-A-0 282 427 (FERCO)<br><br>* the whole document *<br>--- | 1,4-7,<br>10,11 | |
| A | FR-A-2 647 493 (FERCO)<br>* page 2, line 10 - line 14 *<br><br>----- | 1 | |

TECHNICAL FIELDS SEARCHED (Int. Cl.5)

B23P
B23K
E05B
E05D

The present search report has been drawn up for all claims

| Place of search | Date of completion of the search | Examiner |
|---|---|---|
| THE HAGUE | 13 APRIL 1992 | RIS M. |

EPO FORM 1503 03.82 (P0401)